# EUROPEAN PATENT SPECIFICATION

(11) **EP 2 871 426 B1**
(45) Date of publication and mention of the grant of the patent: **31.08.2016**
(21) Application number: 14191993.6
(22) Date of filing: 06.11.2014
(51) Int. Cl.: F24F 1/00, F24F 11/00, F24F 11/02

(54) **Air conditioning apparatus**
Klimaanagenvorrichtung
Appareil de climatisation d'air

(30) Priority: 08.11.2013 JP 2013232437
(43) Date of publication of application: 13.05.2015
(73) Proprietor: MITSUBISHI HEAVY INDUSTRIES, LTD., Tokyo 108-8215 (JP)
(72) Inventor: Takeuchi, Nobuyuki, Tokyo, 108-8215 (JP)
(74) Representative: Intès, Didier Gérard André

(56) References cited:
- EP-A1- 2 108 897
- EP-A2- 2 525 102
- JP-A- H10 141 747

## Description

### {Technical Field}

The present invention relates to an air conditioning apparatus.

### {Background Art}

Conventionally, a duct-type air conditioning apparatus that blows air having undergone heat exchange by a heat exchanger from a blowout port which is connected with a blowout duct is known (see PTL 1, for example). Ventilation resistance of a duct-type air conditioning apparatus varies depending on a length, a diameter or a shape of a duct to which the air conditioning apparatus is mounted. Therefore, it is required to appropriately adjust a rotational speed of a fan for blowing out air having undergone heat exchange toward a blowout port in accordance with the ventilation resistance (static pressure) of the duct to which the air conditioning apparatus is mounted to blow out a desired amount of air into a room.

PTL 1 discloses a duct-type air conditioning apparatus in which a motor for driving a fan is operated at a fixed rotational speed, an operating power of the motor at this time is detected, and thus, a control value during air conditioning can be selected.

### {Citation List}

### {Patent Literature}

{PTL 1} Japanese Unexamined Patent Application, Publication No. Hei10-141747

### {Summary of Invention}

### {Technical Problem}

In PTL 1, in order to set an appropriate air amount within a range of air amounts which can be blown out by the fan included in the duct-type air conditioning apparatus, a control value of the motor is selected.

However, when an air amount within the range of air amounts which can be blown out by one fan is insufficient, which is short of the appropriate air amount, the technique disclosed in PTL 1 cannot work.

When a sufficient air amount cannot be obtained within the range of air amounts of an existing duct-type air conditioning apparatus, a high-output motor and a driver circuit for driving the motor may be additionally designed. However, there are problems that the number of processes and the cost are large, and also the size of the apparatus becomes large.

Therefore, a possible method is designing of an existing duct-type air conditioning apparatus by adding a new fan driven by an auxiliary motor to increase an air amount and blowing out a desired amount of air into a room. A possible auxiliary motor is a driver built-in motor which is controlled to rotate at a rotational speed corresponding to a rotational speed command from an external controlling part, since such a motor is relatively inexpensive.

Some existing duct-type air conditioning apparatuses have a current limiting function for limiting and lowering a rotational speed of a fan such that current of a motor driving the fan is equal to or lower than a predetermined limit value. When, as an auxiliary motor, a driver built-in motor is added to an existing duct-type air conditioning apparatus having the current limiting function, the following problem occurs.

The problem is caused by the fact that there is a motor (main motor) controlled to lower a rotational speed of the fan by the current limiting function while there is an auxiliary motor rotating at a rotational speed corresponding to a rotational speed command from an external controlling part.

In this case, the rotational speed of the main motor operating with the current limiting function is lowered, and in contrast, the rotational speed of the auxiliary motor is maintained to be constant. Thus, the ratio of an air amount of the fan rotated by the main motor to an air amount of the fan rotated by the auxiliary motor is changed so that a desired performance cannot be achieved.

The present invention has been made in view of the foregoing circumstance, and therefore, an object thereof is to provide an air conditioning apparatus including a plurality of blowing parts including a fan and a motor rotating the fan, in which when one motor operates with a current limiting function to limit a value of current flowing through the motor, a rotational speed of the other motor is appropriately adjusted to obtain a desired air amount.

### {Solution to Problem}

In order to achieve the foregoing object, the present invention adopts the following solutions.

An air conditioning apparatus of the present invention includes a heat exchanger; a blowout port for blowing out air having undergone heat exchange by the heat exchanger into a room, the blowout port being connected to a blowout duct; a first blowing part that includes a first fan for blowing out air having undergone heat exchange by the heat exchanger toward the blowout port and a first motor for rotating the first fan; a second blowing part that includes a second fan for blowing out air having undergone heat exchange by the heat exchanger toward the blowout port and a second motor for rotating the second fan; and a controlling part that is configured to transmit a first rotational speed command and a second rotational speed command to the first blowing part and the second blowing part, respectively, and control the first fan to rotate at a first rotational speed and the second fan to rotate at a second rotational speed, characterized in that the first blowing part has a current limiting function to rotate the first fan at a rotational speed lower than the first rotational speed instructed by the first rotational speed command to let current driving the first motor be equal to or lower than a predetermined limit value, and the controlling part is configured to control the second blowing part so that the second fan is rotated at a rotational speed lower than the second rotational speed by transmitting another rotational speed command that is different from the second rotational speed command to the second blowing part when the first blowing part operates with the current limiting function.

According to the air conditioning apparatus of the present invention, when the first motor rotating the first fan operates with the current limiting function, the other rotational speed command different from the second rotational speed command is transmitted from the controlling part to the second blowing part, and thus, the second motor is rotated at a rotational speed lower than the second rotational speed. When the first motor does not operate with the current limiting function, the second rotational speed command is transmitted to the second motor, and thus, the second motor also operates with the current value limited in accordance with the operation of the first motor with the current limiting function.

In this way, it is possible to provide the air conditioning apparatus including the plurality of blowing parts including the fan and the motor rotating the fan, in which when one motor operates with the current limiting function by limiting a value of current flowing through the motor, a rotational speed of the other motor is appropriately adjusted so that a desired air amount can be obtained.

In an air conditioning apparatus of a first aspect of the present invention, the first blowing part includes a driver part capable of switching and executing the current limiting function and a current non-limiting function for rotating the first fan at the first rotational speed in accordance with the first rotational speed command, the second motor is a motor incorporating a driver having a driver function for controlling the rotational speed in accordance with the second rotational speed command transmitted from the controlling part, and the first motor is a driverless motor operating in accordance with a drive signal transmitted from the driver part.

According to the air conditioning apparatus of the present aspect, since the motor incorporating a driver having the driver function for controlling the rotational speed in accordance with the second rotational speed command transmitted from the controlling part is used as the second motor, it is possible to provide an air conditioning apparatus which is relatively inexpensive. Furthermore, due to the intervening controlling part, it is possible for the second motor to execute appropriately the current limiting function which the driver part controlling the driverless motor can execute.

In an air conditioning apparatus of a second aspect of the present invention, the first blowing part is configured to transmit the rotational speed of the first fan to the controlling part when the first blowing part operates with the current limiting function, and the controlling part is configured to determine the rotational speed instructed by the other rotational speed command based on the rotational speed of the first fan transmitted by the first blowing part when the first blowing part operates with the current limiting function.

In this way, when the first blowing part operates with the current limiting function, the rotational speed instructed by the other rotational speed command can be determined so as to rotate the second fan at an appropriate rotational speed based on the rotational speed of the first fan.

In an air conditioning apparatus of a third aspect of the present invention, a blown amount of the first fan is equal to a blown amount of the second fan when the first fan and the second fan each rotate at the same rotational speed, and the first rotational speed instructed by the first rotational speed command is the same as the second rotational speed instructed by the second rotational speed command, and the rotational speed of the first fan of the first blowing part operating with the current limiting function is the same as the rotational speed of the second fan instructed by the other rotational speed command.

In this way, the rotational speed of the first fan and the second fan, the blown amounts of which are equal to each other at the same rotational speed, is set to be fixed regardless of whether the first blowing part operates with the current limiting function or not, and thus, a desired air amount can be obtained.

In an air conditioning apparatus of a fourth aspect of the present invention, output of the first motor is higher than output of the second motor.

In this way, in order that the second fan supplies a shortage of the air amount of the first fan which is rotated with power of the first motor having the higher output, the second motor having the lower output may be applied as an auxiliary motor to rotate the second fan.

### {Advantageous Effects of Invention}

According to the present invention, it is possible to provide an air conditioning apparatus including a plurality of blowing parts including a fan and a motor rotating the fan, in which when one motor operates while controlling a value of current flowing through the motor with a current limiting function, rotational speed of the other motor is appropriately adjusted so that a desired air amount can be obtained.

### {Brief Description of Drawings}

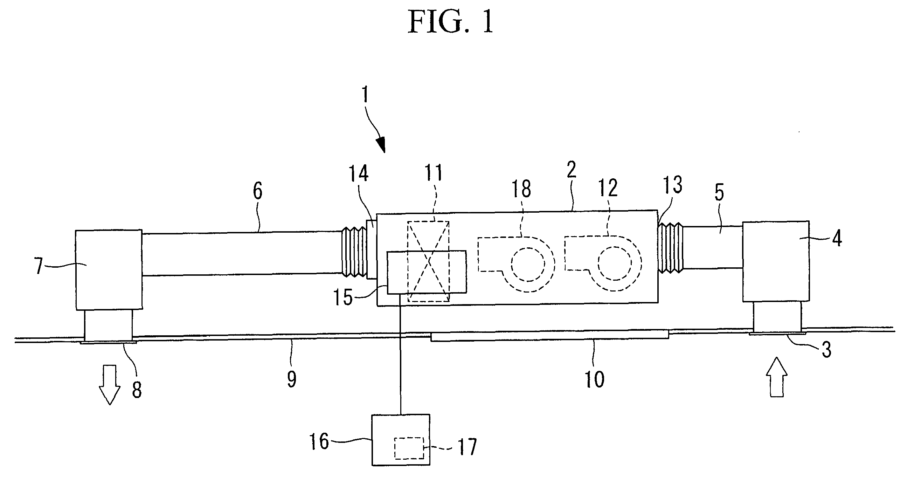

{Fig. 1}
   Fig. 1 is a side diagram illustrating a duct-type air conditioning apparatus of an embodiment of the present invention;
{Fig. 2}
   Fig. 2 is a block diagram illustrating a configuration of controlling the duct-type air conditioning apparatus illustrated in Fig. 1;
{Fig. 3}
   Fig. 3 is a diagram illustrating a static pressure-air amount characteristic of a DC motor included in a first blowing part illustrated in Fig. 1
{Fig. 4}
   Fig. 4 is a diagram illustrating a static pressure-air amount characteristic of a DC motor included in a second blowing part illustrated in Fig. 1;
{Fig. 5}
   Fig. 5 is a flowchart illustrating processing executed by a controller illustrated in Fig. 2;
{Fig. 6}
   Fig. 6 is a flowchart illustrating processing executed by a driver circuit of the first blowing part illustrated in Fig. 2; and
{Fig. 7}
   Fig. 7 is a flowchart illustrating processing executed by the DC motor of the second blowing part illustrated in Fig. 2.

### {Description of Embodiments}

Hereinafter, description will be given of a duct-type air conditioning apparatus according to an embodiment of the present invention with reference to the drawings. Fig. 1 is a side diagram illustrating a duct-type air conditioning apparatus of an embodiment of the present invention. In the present embodiment, as an example of the duct-type air conditioning apparatus, a duct-type air conditioning apparatus 1 which is embedded and mounted in a ceiling is exemplified.

As illustrated in Fig. 1, a unit body 2 of the duct-type air conditioning apparatus 1 is mounted by being suspended in a ceiling via a plurality of suspending bolts which are disposed in a vertical direction in a beam or the like of a building. Illustration of an outdoor unit disposed outside the building is omitted.

The duct-type air conditioning apparatus (air conditioning apparatus) 1 is configured to suck indoor air from a room via a suction grill 3, a muffling chamber 4 and a suction duct 5, exchange heat between the sucked indoor air and a refrigerant for cooling or heating, and then blow out the air into the room via a blowout duct 6, a blowout unit 7, a blowout grill 8 and the like. The length, diameter, shape and the like of the blowout duct 6 vary depending on the arrangement position of the blowout unit 7 and the like. On a ceiling surface 9, an inspection hole 10 is disposed in order to inspect or maintain the unit body 2 of the duct-type air conditioning apparatus 1.

The unit body 2 is formed in a box shape, and incorporates an indoor heat exchanger (heat exchanger) 11 which exchanges heat between the refrigerator and the indoor air, a first blowing part 12 which circulates the indoor air, and a second blowing part 18 which circulates the indoor air.

The unit body 2 also incorporates, e.g., a drain pan which receives drain water generated in the indoor heat exchanger 11, a drain pump which drains the drain water accumulated in the drain pan to the outside (the drain pan and the drain pump not illustrated).

Furthermore, on front and rear sides of the unit body 2, a suction port 13 and a blowout port 14 are provided respectively, to which the suction duct 5 and the blowout duct 6 are connected, respectively. The blowout port 14 blows out the air having undergone heat exchange by the indoor heat exchanger 11 into the room via the blowout duct 6.

On one side of the unit body 2, a controller 15 which controls operation of the duct-type air conditioning apparatus 1 is provided, and a remote control 16 is connected to the controller 15.

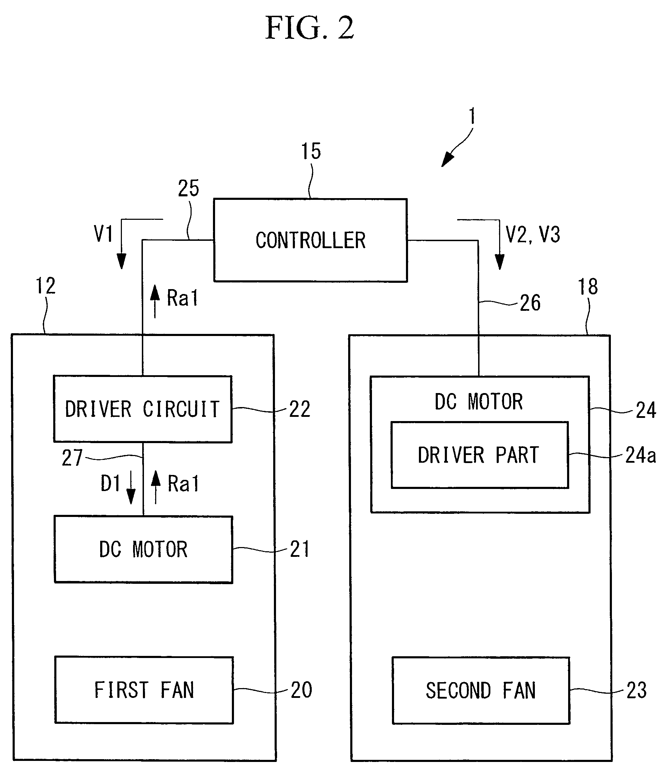

Next, description will be given of a configuration of controlling the duct-type air conditioning apparatus 1 of the present embodiment, with reference to Fig. 2. Fig. 2 is a block diagram illustrating the configuration of controlling the duct-type air conditioning apparatus 1 of the present embodiment. As illustrated in Fig. 2, the controller 15 which controls the operation of the duct-type air conditioning apparatus 1 is electrically connected to the first blowing part 12 and the second blowing part 18.

The controller 15 includes an arithmetic part such as a CPU, and controls the operation of the duct-type air conditioning apparatus 1 by reading out an operation program stored in a storage part such as a ROM (not illustrated) and executing the program in the arithmetic part.

The controller 15 transmits a first rotational speed command V1, which is a voltage signal, to a driver circuit 22 of the first blowing part 12 via a signal line 25. The controller also transmits a second rotational speed command V2, which is a voltage signal, to a DC motor 24 of the second blowing part 18 via a signal line 26. Here, the first rotational speed command V1 is a command for rotating a DC motor 21 at a first rotational speed R1 per unit time, and the second rotational speed command V2 is a command for rotating the DC motor 24 at a second rotational speed R2 per unit time.

As illustrated in Fig. 2, the first blowing part 12 includes a first fan 20, the DC motor 21 (first motor) and the driver circuit 22 (driver part). The first fan 20 is a fan blowing the air having undergone heat exchange by the indoor heat exchanger 11 toward the blowout port 14. The DC motor 21 is a DC motor including a drive shaft (not illustrated) connected to a rotational shaft (not illustrated) of the first fan 20. The DC motor 21 rotates the first fan 20 around the rotational shaft through the drive shaft.

The driver circuit 22 included in the first blowing part 12 receives the first rotational speed command V1 transmitted from the controller 15 via the signal line 25, and transmits a drive signal D1 to the DC motor 21 via a signal line 27 so as to rotate the first fan 20 at the first rotational speed R1 corresponding to the first rotational speed command V1. The DC motor 21 is a driverless motor which operates in accordance with the drive signal D1 transmitted from the external driver circuit 22.

As illustrated in Fig. 2, the second blowing part 18 includes a second fan 23 and the DC motor 24 (second motor). The second fan 23 is a fan blowing the air having undergone heat exchange by the indoor heat exchanger 11 toward the blowout port 14. The DC motor 24 is a DC motor including a drive shaft (not illustrated) connected to a rotational shaft (not illustrated) of the second fan 23. The DC motor 24 rotates the second fan 23 around the rotational shaft through the drive shaft.

The DC motor 24 includes a driver part 24a which receives the second rotational speed command V2 transmitted from the controller 15 via the signal line 26 and controls the DC motor 24 to rotate the second fan 23 at a second rotational speed R2 corresponding to the second rotational speed command V2. In this way, the DC motor 24 is a motor incorporating a driver which is controlled by the incorporated driver part 24a.

Motors to be applied as the DC motor 21 and the DC motor 24 may have various outputs. For example, a high-output motor of rated output of 400 W or more may be applied as the DC motor 21, and a low-output motor of rated output of 200 W or less may be applied as the DC motor 24.

In this way, the first blowing part 12 controls the rotational speed of the first fan in accordance with the first rotational speed command V1 transmitted from the controller 15, and the second blowing part 18 controls the rotational speed of the second fan in accordance with the second rotational speed command V2 transmitted from the controller 15. Between the first blowing part 12 and the second blowing part 18, there is a point of similarity that each of the blowing parts controls the rotational speed of the fan in accordance with the rotational speed command transmitted from the controller 15.

On the other hand, there is a different point that the first blowing part 12 has a current limiting function, which will be described later, while the second blowing part 18 does not have a current limiting function. As described later, although the second blowing part 18 itself does not have a current limiting function, at the time of the first blowing part 12 executing the current limiting function, the controller 15 makes the rotational speed command to be transmitted to the second blowing part 18 different. Due to the intervening controller 15, the second blowing part 18 operates in a state where the current is limited. Operation of the respective parts including the controller 15 will be described later.

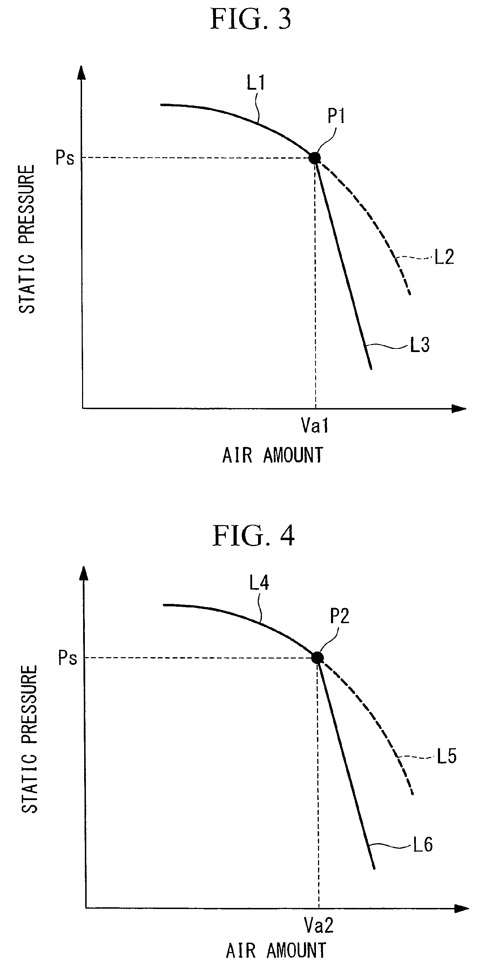

Here, the current limiting function of the first blowing part 12 will be described. Fig. 3 is a diagram illustrating a static pressure-air amount characteristic of the DC motor 21 included in the first blowing part 12. Reference characters L1 and L2 in the drawing denote curves connected with each other at a maximum operating point P1, and each point on the curves indicates an operating point where the DC motor 21 is rotated at the first rotational speed R1.

The maximum operating point P1 indicates an operating point where a current value of the DC motor 21 which increases with increase in air amount reaches a limit value Imax1 (predetermined limit value). At the maximum operating point P1, the static pressure is Ps and the air amount is Va1.

In an environment where a static pressure is lower than the static pressure Ps1 which is at the maximum operating point P1, when the DC motor 21 is rotated at the first rotational speed R1 indicated by L2, the current value of the current required by the DC motor 21 at this time exceeds Imax1. Accordingly, the first blowing part 12 of the present embodiment has the current limiting function to rotate the first fan 20 at a rotational speed lower than the first rotational speed R1 such that the current value of the current flowing through the DC motor 21 is equal to or lower than the limit value Imax1.

Reference character L3 in Fig. 3 denotes an operating point of the DC motor 21 with the current limiting function being executed in an environment where a static pressure is lower than the static pressure Ps1 at the maximum operating point P1. Through setting the operating point of the DC motor 21 not on L2 but on L3, the current value of the current flowing through the DC motor 21 is set to be equal to or lower than the limit value Imax1.

The rotational speed at which the first fan 20 operating at the operating point on L3 rotates is lower than the first rotational speed R1.

Fig. 4 is a diagram illustrating a static pressure-air amount characteristic of the DC motor 24 included in the second blowing part 18. Reference characters L4 and L5 in the drawing denote curves connected with each other at a maximum operating point P2, and each point on the curves shows an operating point where the DC motor 24 is rotated at the second rotational speed R2.

The maximum operating point P2 indicates an operating point where a current value of the DC motor 24 which increases with increase in air amount reaches a limit value Imax2. At the maximum operating point P2, the static pressure is Ps and the air amount is Va2.

The controller 15, the driver circuit 22, the driver part 24a and the like are designed in advance such that the second blowing part 18 operates at the maximum operating point P2 in the aforementioned case where the first blowing part 12 operates at the maximum operating point P1. The static pressure of the first blowing part 12 at the maximum operating point P1 is the same static pressure Ps of the second blowing part 18 at the maximum operating point P2.

In an environment where a static pressure is lower than the static pressure Ps at the maximum operating point P2, when the DC motor 24 is rotated at the second rotational speed R2 indicated by L5, the current value of the current required by the DC motor 24 exceeds Imax2. Accordingly, due to the intervening controller 15, the second blowing part 18 of the present embodiment rotates the second fan 23 at a rotational speed lower than the second rotational speed R2 such that the current value of the current flowing through the DC motor 24 is equal to or lower than the limit value Imax2.

Reference character L6 in Fig. 4 denotes an operating point of the DC motor 24 in an environment where a static pressure is lower than the static pressure Ps at the maximum operating point P2. Through setting the operating point of the DC motor 24 not on L5 but on L6, the current value of the current flowing through the DC motor 24 is set to be equal to or lower than the limit value Imax2.

The rotational speed at which the second fan 23 operating at the operating point on L6 rotates is equal to or lower than the second rotational speed R2.

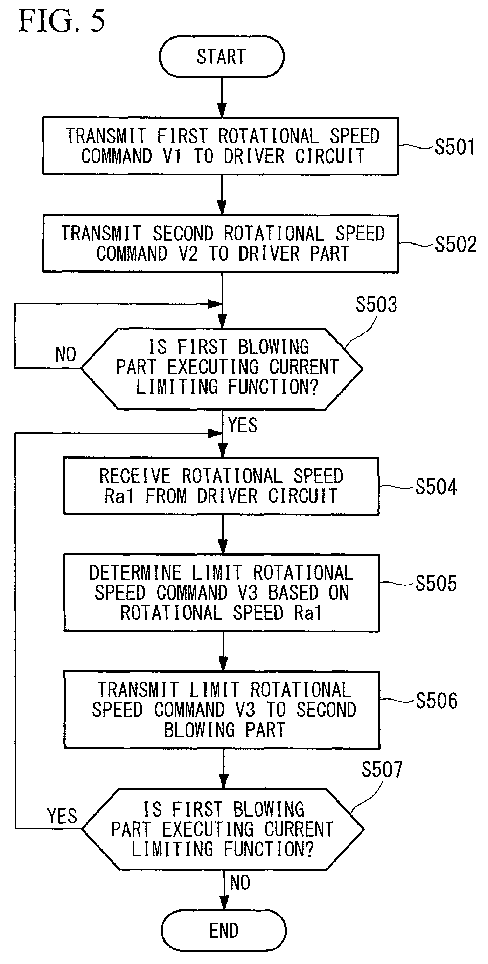

Next, description will be given of processing executed by the controller 15 with reference to Fig. 5. Fig. 5 is a flowchart illustrating processing executed by the controller illustrated in Fig. 2.

Each process in Fig. 5 is conducted by the arithmetic part of the controller 15 reading out and executing an operation program stored in a storage part such as a ROM (not illustrated).

At step S501, the controller 15 transmits the first rotational speed command V1 to the driver circuit 22 of the first blowing part 12.

At step S502, the controller 15 also transmits the second rotational speed command V2 to the driver part 24a included in the DC motor 24 of the second blowing part 18.

At step S503, the controller 15 determines whether the first blowing part 12 is executing the current limiting function or not. When the controller 15 determines that the first blowing part 12 is executing the current limiting function (YES), the controller 15 advances the processing to step S504. When the determination of step S503 is NO, the controller 15 again performs the determination of step S503.

When the controller 15 receives, from the driver circuit 22 of the first blowing part 12, a transmission indicating that the current limiting function is executed, the controller 15 determines YES at step S503.

At step S504, the controller 15 receives, from the driver circuit 22 of the first blowing part 12 which is executing the current limiting function, the rotational speed Ra1 which indicates a current rotational speed of the DC motor 21 per unit time.

After receiving the rotational speed Ra1, the controller 15 determines a limit rotational speed command V3 to be transmitted to the second blowing part 18, based on the rotational speed Ra1. The limit rotational speed command V3 is a command value for rotating the second fan 23 at a rotational speed R3 which is lower than the second rotational speed R2. The controller 15 determines the limit rotational speed command V3 such that the DC motor 24 operates at the operating point indicated by L6 in Fig. 4.

At step S506, the controller 15 transmits the limit rotational speed command V3 determined at step S505 to the driver part 24a included in the DC motor 24 of the second blowing part 18. After receiving the limit rotational speed command V3, the driver part 24a controls the DC motor 24 so as to set the rotational speed Ra2 of the DC motor 24 to coincide with the third rotational speed R3, as described later.

At step S507, the controller 15 determines whether the first blowing part 12 is executing the current limiting function or not, again. When the controller 15 determines that the first blowing part 12 is executing the current limiting function (YES), the controller 15 advances the processing to step S504. When the determination of step S507 is NO, the controller 15 ends the processing of the present flowchart. When the controller 15 receives a transmission indicating that the current limiting function has been canceled from the driver circuit 22 of the first blowing part 12, the controller 15 determines NO at step S507. After ending the processing of the present flowchart, the controller 15 starts the processing of the present flowchart from step S501, again.

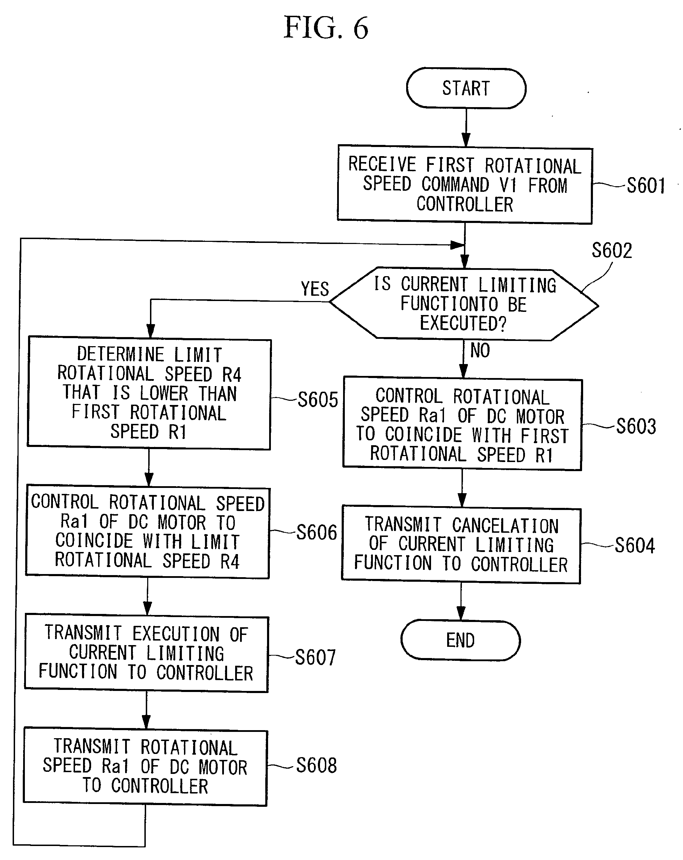

With reference to Fig. 6, description will be given of processing executed by the driver circuit 22 of the first blowing part 12. Fig. 6 is a flowchart illustrating processing executed by the driver circuit 22 of the first blowing part 12 illustrated in Fig. 2.

Each process in Fig. 6 is conducted by the arithmetic part of the driver circuit 22 reading out and executing an operation program stored in a storage part such as a ROM (not illustrated).

At step S601, the driver circuit 22 receives the first rotational speed command V1 from the controller 15.

At step S602, the driver circuit 22 determines whether the current limiting function is to be executed based on the first rotational speed command V1 or not. When the driver circuit 22 determines that the current limiting function is to be executed, the driver circuit 22 advances the processing to step S605. Otherwise, the driver circuit 22 advances the processing to step S603.

Whether the current limiting function is to be executed or not is determined, for example, in such a way that a static pressure in an environment where the duct-type air conditioning apparatus 1 is disposed is measured in advance, the DC motor 21 is rotated at the first rotational speed R1 corresponding to the first rotational speed command V1 in the environment of the static pressure, and then whether the current value exceeds the limit value Imax1 or not. Specifically, the limit value Imax1 is exceeded in an environment where a static pressure is lower than the static pressure Ps corresponding to the limit value Imax1, and thus, it is determined YES at step S602.

Step S603 and step S604 which will be described below are processes to be conducted in the case where the current limiting function is not executed. The function achieved by the processes is a current non-limiting function.

On the other hand, step S605 to step S608 which will be described below are processes to be conducted in the case where the current limiting function is executed. The function achieved by the processes is a current limiting function.

In this way, the driver circuit 22 can switch and execute the current limiting function and the current non-limiting function.

At step S603, the driver circuit 22 performs control so as to set the rotational speed Ra1 of the DC motor 21 to coincide with the first rotational speed R1 corresponding to the first rotational speed command V1. The DC motor 21 includes a terminal that transmits the rotational speed Ra1 to the driver circuit 22. The driver circuit 22 adjusts the voltage value of the drive voltage output to the DC motor 21 based on the rotational speed Ra1 received from the DC motor 21, and thereby the rational speed Ra1 of the DC motor 21 is made to coincide with the first rotational speed R1.

At step S604, the driver circuit 22 transmits cancelation of the current limiting function of the first blowing part 12 to the controller 15. This transmission may be performed, for example, in a case where the function of the first blowing part 12 operating with the current limiting function is switched to the current non-limiting function.

After executing step S604, the driver circuit 22 ends the processing of the present flowchart and then starts the processing of the present flowchart.

Here, the current limiting function executed at step S605 to step S608 will be described.

At step S605, the driver circuit 22 determines a limit rotational speed R4 which is lower than the first rotational speed R1 corresponding to the first rotational speed command V1.

The driver circuit 22 determines the limit rotational speed R4 so as to operate the DC motor 21 at the operating point indicated by L3 in Fig. 3.

At step S606, the driver circuit 22 performs control so as to set the rotational speed Ra1 of the DC motor 21 to coincide with the limit rotational speed R4. The driver circuit 22 adjusts the voltage value of the drive voltage output to the DC motor 21 based on the rotational speed Ra1 received from the DC motor 21, and thereby the rational speed Ra1 of the DC motor 21 is made to coincide with the limit rotational speed R4.

At step S607, the driver circuit 22 transmits execution of the current limiting function of the first blowing part 12 to the controller 15. At step S608, the driver circuit 22 also transmits the rotational speed Ra1 of the DC motor 21 to the controller 15.

After step S608 is finished, the driver circuit 22 advances the processing to step S602.

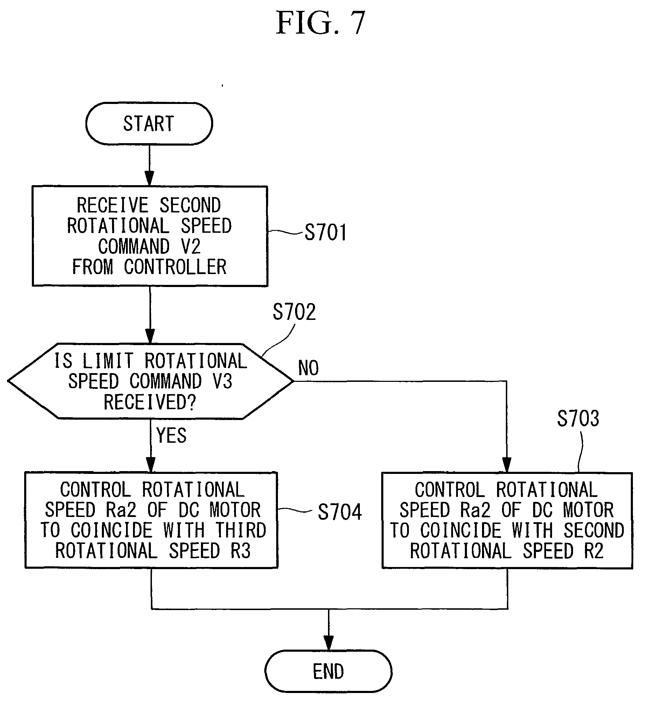

With reference to Fig. 7, description will be given of processing executed by the driver part 24a of the DC motor 24 of the second blowing part 18. Fig. 7 is a flowchart illustrating processing executed by the DC motor 24 of the second blowing part 18 illustrated in Fig. 2. Each process in Fig. 7 is conducted by the driver part 24a incorporated in the DC motor 24.

At step S701, the DC motor 24 receives the second rotational speed command V2 from the controller 15.

At step S702, the DC motor 24 determines whether the limit rotational speed command V3 is received from the controller 15 or not. When the limit rotational speed command V3 is received, the DC motor 24 advances the processing to step S704. When the limit rotational speed command V3 is not received, the DC motor 24 advances the processing to step S703.

Step S703 is executed in the case where the limit rotational speed command V3 is not received from the controller 15, that is, where the DC motor 21 of the first blowing part 12 is rotated at the first rotational speed R1. At step S703, the DC motor 24 performs control so as to set the rotational speed Ra2 of the DC motor 24 to coincide with the second rotational speed R2 corresponding to the second rotational speed command V2.

The driver part 24a of the DC motor 24 adjusts the voltage value of the drive voltage for driving the DC motor 24 based on the rotational speed Ra2 of the DC motor 24, and thereby, sets the rotational speed Ra2 of the DC motor 24 to coincide with the second rotational speed R2.

Step S704 is executed in the case where the limit rotational speed command V3 is received from the controller 15, that is, where the DC motor 21 of the first blowing part 12 is rotated at the limit rotational speed R4. At step S704, the DC motor 24 performs control so as to set the rotational speed Ra2 of the DC motor 24 to coincide with the third rotational speed R3 corresponding to the limit rotational speed command V3.

The driver part 24a of the DC motor 24 adjusts the voltage value of the drive voltage for driving the DC motor 24 based on the rotational speed Ra2 of the DC motor 24, and thereby, sets the rotational speed Ra2 of the DC motor 24 to coincide with the third rotational speed R3.

As described so far with reference to the flowcharts in Fig. 5 to Fig. 7, the first blowing part 12 has the current limiting function for limiting the current value of the DC motor 21 so that the current value does not exceed the limit value Imax1. When the first blowing part 12 operates with the current limiting function, the operation is transmitted to the controller 15. When the first blowing part 12 operates with the current limiting function, the controller 15 transmits, to the second blowing part 18, the limit rotational speed command V3 for reducing the rotational speed of the DC motor 24 of the second blowing part 18 from the second rotational speed R2 to the third rotational speed R3. When the limit rotational speed command V3 is transmitted to the second blowing part 18, the second blowing part 18 then reduces the rotational speed of the DC motor 24 from the second rotational speed R2 to the third rotational speed R3.

Accordingly, in conjunction with reduction of the rotational speed of the first fan 20 by the first blowing part 12 with use of the current limiting function, the rotational speed of the second fan 23 of the second blowing part 18 can be reduced.

As the first fan 20 of the first blowing part 12 and the second fan 23 of the second blowing part 18, respectively, it may be used fans that have the same blowing amount (blowing capability) when each of the fans is rotated at the same rotational speed.

In this case, the first rotational speed R1 corresponding to the first rotational speed command V1 is assumed to be set to coincide with the second rotational speed R2 corresponding to the second rotational speed command V2. In this case, furthermore, the limit rotational speed R4 at which the first blowing part 12 operates with the current limiting function is assumed to be set to coincide with the third rotational speed R3 of the second blowing part 18 corresponding to the limit rotational speed command V3 at this time.

As described so far, the duct-type air conditioning apparatus 1 of the present invention, when the DC motor 21 rotating the first fan 20 operates with the current limiting function, the limit rotational speed command V3 that is different from the second rotational speed command V2 transmitted from the controller 15 to the second blowing part 18, and thus, the DC motor 24 is rotated at the third rotational speed R3 that is lower than the second rotational speed R2. The second rotational speed command V2 is a rotational speed command to be transmitted to the DC motor 24 when the DC motor 21 does not operate with the current limiting function, and thus, the DC motor 24 also operates in a state where the current value is limited, in accordance with the operation of the DC motor 21 with the current limiting function.

In this way, in the duct-type air conditioning apparatus 1 including the plurality of blowing parts each including a fan and a motor rotating the fan, when one motor (DC motor 21) operates with the current value of the current flowing through the motor limited by the current limiting function, the rotational speed of the other motor (DC motor 24) is appropriately adjusted, and thus, a desired air amount can be obtained.

In the duct-type air conditioning apparatus 1 of the present embodiment, the first blowing part 12 includes the driver circuit 22 capable of switching and executing the current limiting function and the current non-limiting function, which is to rotate the first fan 20 at the first rotational speed R1 corresponding to the first rotational speed command V1. The DC motor 24 is a motor incorporating a driver with a driver function for controlling the rotational speed in accordance with the second rotational speed command V2 transmitted from the controller 15. The DC motor 21 is a driverless motor which operates in accordance with the drive signal D1 transmitted from the external driver circuit 22.

According to the duct-type air conditioning apparatus 1 of the present embodiment, as the DC motor 24, a motor incorporating a driver having a driver function for controlling the rotational speed in accordance with the second rotational speed command V2 transmitted from the controller 15 is used, and thus, it is possible to provide the duct-type air conditioning apparatus 1 which is relatively inexpensive. Furthermore, due to the intervening controller 15, it is possible for the DC motor 24 to execute appropriately the current limiting function which the driver circuit 22 controlling the driverless motor can execute.

In the duct-type air conditioning apparatus 1 of the present embodiment, when the first blowing part 12 operates with the current limiting function, the first blowing part 12 transmits the rotational speed Ra1 of the first fan 20 to the controller 15. Also, when the first blowing part 12 operates with the current limiting function, the controller 15 determines the third rotational speed R3 instructed by the limit rotational speed command V3 based on the rotational speed Ra1 of the first fan 20 transmitted from the first blowing part 12.

In this way, when the first blowing part 12 operates with the current limiting function, the third rotational speed instructed by the limit rotational speed command V3 can be determined so as to rotate the second fan 23 at an appropriate rotational speed based on the rotational speed Ra1 of the first fan 20.

In the duct-type air conditioning apparatus 1 of the present embodiment, the blown amounts of the first fan 20 and the second fan 23 may be equal to each other in a case where the first fan 20 and the second fan 23 rotate at the same rotational speed, and the first rotational speed R1 instructed by the first rotational speed command V1 may be equal to the second rotational speed R2 instructed by the second rotational speed command V2. In this case, the rotational speed Ra1 of the first fan 20 of the first blowing part 12 operating with the current limiting function is set to be equal to the rotational speed R3 of the second fan 18 instructed by the limit rotational speed command V3.

In this way, the rotational speed of the first fan 20 and the second fan 23, the blown amounts of which are equal to each other at the same rotational speed, is set to be fixed regardless of whether the first blowing part 12 operates with the current limiting function or not, and thus, a desired air amount can be obtained.

In the duct-type air conditioning apparatus 1 of the present embodiment, the output of the DC motor 21 is higher than the output of the DC motor 24.

In this way, in order that the second fan 23 supplies a shortage of the air amount of the first fan 20 which is rotated with power of the DC motor 21 having the higher output, the DC motor 24 having the lower output may be applied as an auxiliary motor to rotate the second fan 23.

## Claims

1. An air conditioning apparatus (1) comprising:
a heat exchanger (11);
a blowout port (14) for blowing out air having undergone heat exchange by the heat exchanger into a room, the blowout port being connected to a blowout duct;
a first blowing part (12) that includes a first fan (20) for blowing out air having undergone heat exchange by the heat exchanger (11) toward the blowout port (14) and a first motor (21) for rotating the first fan (20);
a second blowing part (18) that includes a second fan (23) for blowing out air having undergone heat exchange by the heat exchanger (11) toward the blowout port (14) and a second motor (24) for rotating the second fan (23); and
a controlling part (15) configured so as to transmit a first rotational speed command (V1) and a second rotational speed command (V2) to the first blowing part (12) and the second blowing part (18), respectively, and control the first fan (20) to rotate at a first rotational speed and the second fan (23) to rotate at a second rotational speed, **characterized in that**
the first blowing part (12) has a current limiting function to rotate the first fan (20) at a rotational speed lower than the first rotational speed instructed by the first rotational speed command (V1) to let current driving the first motor (21) be equal to or lower than a predetermined limit value, and
the controlling part (15) is configured to control the second blowing part (18) so that the second fan is rotated at a rotational speed lower than the second rotational speed by transmitting another rotational speed command that is different from the second rotational speed command to the second blowing part when the first blowing part operates with the current limiting function.

2. The air conditioning apparatus (1) according to claim 1, wherein the first blowing part (12) includes a driver part (22) capable of switching and executing the current limiting function and a current non-limiting function for rotating the first fan (20) at the first rotational speed in accordance with the first rotational speed command (V1), the second motor (24) is a motor incorporating a driver having a driver function for controlling the rotational speed in accordance with the second rotational speed command (V2) transmitted from the controlling part (15), and the first motor (21) is a driverless motor capable of operating in accordance with a drive signal transmitted from the driver part (22).

3. The air conditioning apparatus (1) according to claim 1 or 2, wherein the first blowing part (12) is configured to transmit the rotational speed of the first fan (20) to the controlling part (15) when the first blowing part (12) operates with the current limiting function, and the controlling part (15) is configured to determine the rotational speed instructed by the other rotational speed command based on the rotational speed of the first fan (20) transmitted by the first blowing part (12) when the first blowing part (12) operates with the current limiting function.

4. The air conditioning apparatus (1) according to any one of claims 1 to 3, wherein a blown amount of the first fan (20) is equal to a blown amount of the second fan (23) when the first fan (20) and the second fan (23) each rotate at the same rotational speed, and the first rotational speed instructed by the first rotational speed command (V1) is the same as the second rotational speed instructed by the second rotational speed command (V2), and the rotational speed of the first fan (20) of the first blowing part (12) operating with the current limiting function is the same as the rotational speed of the second fan (23) instructed by the other rotational speed command.

5. The air conditioning apparatus (1) according to any one of claims 1 to 4, wherein output of the first motor (21) is higher than output of the second motor (24).

## Patentansprüche

1. Klimatisierungsvorrichtung (1), umfassend:
einen Wärmetauscher (11),
eine Ausblasöffnung (14) zum Ausblasen von Luft, die einem Wärmetausch durch den Wärmetauscher unterzogen wurde, in einen Raum, wobei die Ausblasöffnung mit einem Ausblaskanal verbunden ist,
ein erstes Blasteil (12), das ein erstes Gebläse (20), um Luft, die einem Wärmetausch durch den Wärmetauscher (11) unterzogen wurde, in Richtung der Ausblasöffnung (14) auszublasen, und einen ersten Motor (21) zum Drehen des ersten Gebläses (20) umfasst,
ein zweites Blasteil (18), das ein zweites Gebläse (23), um Luft, die einem Wärmetausch durch den Wärmetauscher (11) unterzogen wurde, in Richtung der Ausblasöffnung (14) auszublasen, und einen zweiten Motor (24) zum Drehen des zweiten Gebläses (23) umfasst und
ein Steuerteil (15), das dafür konfiguriert ist, einen ersten Drehzahlbefehl (V1) und einen zweiten Drehzahlbefehl (V2) an das erste Blasteil (12) bzw. das zweite Blasteil (18) zu senden, und das erste Gebläse (20) zu veranlassen, sich mit einer ersten Drehzahl zu drehen, und das zweite Gebläse (23) zu veranlassen, sich mit einer zweiten Drehzahl zu drehen, **dadurch gekennzeichnet, dass**
dass das erste Blasteil (12) eine Strombegrenzungsfunktion hat, um das erste Gebläse (20) mit einer Drehzahl zu drehen, die niedriger ist als die erste Drehzahl, die durch den ersten Drehzahlbefehl (V1) angewiesen wurde, damit Strom, der den ersten Motor (21) antreibt, gleich oder kleiner als ein vorgegebener Grenzwert ist, und
das Steuerteil (15) dafür konfiguriert ist, das zweite Blasteil (18) so zu steuern, dass das zweite Gebläse mit einer Drehzahl gedreht wird, die niedriger ist als die zweite Drehzahl, indem ein weiterer Drehzahlbefehl, der sich von dem zweiten Drehzahlbefehl unterscheidet, an den zweiten Blasteil gesendet wird, wenn das erste Blasteil mit der Strombegrenzungsfunktion arbeitet.

2. Klimatisierungsvorrichtung (1) nach Anspruch 1, wobei das erste Blasteil (12) ein Ansteuerungsteil (22) umfasst, das in der Lage ist, die Strombegrenzungsfunktion und eine Strom-Nichtbegrenzungsfunktion umzuschalten und auszuführen, um das erste Gebläse (20) mit der ersten Drehzahl gemäß dem ersten Drehzahlbefehl (V1) zu drehen, wobei der zweite Motor (24) ein Motor ist, der eine Ansteuerung enthält, die eine Ansteuerungsfunktion aufweist, um die Drehzahl gemäß dem zweiten Drehzahlbefehl (V2) zu steuern, der von dem Steuerteil (15) gesendet wurde, und wobei der erste Motor (21) ein ansteuerungsloser Motor ist, der in der Lage ist, gemäß einem Ansteuerungssignal zu arbeiten, das von dem Ansteuerungsteil (22) gesendet wurde.

3. Klimatisierungsvorrichtung (1) nach Anspruch 1 oder 2, wobei das erste Blasteil (12) dafür konfiguriert ist, die Drehzahl des ersten Gebläses (20) an das Steuerteil (15) zu senden, wenn das erste Blasteil (12) mit der Strombegrenzungsfunktion arbeitet, und das Steuerteil (15) dafür konfiguriert ist, die durch den weiteren Drehzahlbefehl angewiesene Drehzahl anhand der Drehzahl des ersten Gebläses (20) zu bestimmen, die durch das erste Blasteil (12) gesendet wurde, wenn das erste Blasteil (12) mit der Strombegrenzungsfunktion arbeitet.

4. Klimatisierungsvorrichtung (1) nach einem der Ansprüche 1 bis 3, wobei eine Blasmenge des ersten Gebläses (20) gleich einer Blasmenge des zweiten Gebläses (23) ist, wenn sich das erste Gebläse (20) und das zweite Gebläse (23) jeweils mit der gleichen Drehzahl drehen, und die durch den ersten Drehzahlbefehl (V1) angewiesene erste Drehzahl die gleiche ist wie die durch den zweiten Drehzahlbefehl (V2) angewiesene zweite Drehzahl, und die Drehzahl des ersten Gebläses (20) des ersten Blasteils (12), die mit der Strombegrenzungsfunktion arbeitet, die gleiche ist wie die Drehzahl des zweiten Gebläses (23), die durch den weiteren Drehzahlbefehl angewiesen wurde.

5. Klimatisierungsvorrichtung (1) nach einem der Ansprüche 1 bis 4, wobei die Leistungsabgabe des ersten Motors (21) höher ist als die Leistungsabgabe des zweiten Motors (24).

## Revendications

1. Appareil de climatisation (1) comprenant :
un échangeur de chaleur (11) ;
un orifice de sortie (14) pour souffler à l'extérieur l'air ayant subi un échange de chaleur par l'échangeur de chaleur dans une pièce, l'orifice de sortie étant relié à un conduit de sortie ;
un premier élément de soufflage (12) qui comprend un premier ventilateur (20) pour souffler l'air ayant subi un échange de chaleur par l'échangeur de chaleur (11) vers l'orifice de sortie (14) et un premier moteur (21) pour tourner le premier ventilateur (20) ;
un deuxième élément de soufflage (18) qui comprend un deuxième ventilateur (23) pour souffler l'air ayant subi un échange de chaleur par l'échangeur de chaleur (11) vers l'orifice de sortie (14) et un deuxième moteur (24) pour faire tourner le deuxième ventilateur (23) ; et
une partie de commande (15) configurée de manière à transmettre une première commande de vitesse de rotation (V1) et une deuxième commande de vitesse de rotation (V2) au premier élément de soufflage (12) et au deuxième élément de soufflage (18), respectivement, et commander le premier ventilateur (20) pour qu'il tourne à une première vitesse de rotation et le deuxième ventilateur (23) pour qu'il tourne à une deuxième vitesse de rotation, **caractérisé en ce que**
le premier élément de soufflage (12) a une fonction de limitation de courant pour faire tourner le premier ventilateur (20) à une vitesse de rotation inférieure à la première vitesse de rotation ordonnée par la première commande de vitesse de rotation (V1) pour laisser le courant commandant le premier moteur (21) être inférieur ou égal à une valeur limite prédéterminée, et
la partie de commande (15) est configurée pour commander le deuxième élément de soufflage (18) de sorte que le deuxième ventilateur soit mis en rotation à une vitesse de rotation inférieure à la deuxième vitesse de rotation en transmettant une autre commande de vitesse de rotation qui est différente de la deuxième commande de vitesse de rotation au deuxième élément de soufflage lorsque le premier élément de soufflage fonctionne avec la fonction de limitation de courant.

2. Appareil de climatisation (1) selon la revendication 1, dans lequel le premier élément de soufflage (12) comprend un pilote (22) capable de commuter et d'exécuter la fonction de limitation de courant et une fonction de non limitation de courant pour faire tourner le premier ventilateur (20) à la première vitesse de rotation conformément à la première commande de vitesse de rotation (V1), le deuxième moteur (24) est un moteur incorporant un pilote ayant une fonction de pilote pour commander la vitesse de rotation conformément à la deuxième commande de vitesse de rotation (V2) transmise par la partie de commande (15), et le premier moteur (21) est un moteur sans pilote capable de fonctionner conformément à un signal de commande transmis par le pilote (22).

3. Appareil de climatisation (1) selon la revendication 1 ou 2, dans lequel le premier élément de soufflage (12) est configuré pour transmettre la vitesse de rotation du premier ventilateur (20) à la partie de commande (15) lorsque le premier élément de soufflage (12) fonctionne avec la fonction de limitation de courant, et la partie de commande (15) est configurée pour déterminer la vitesse de rotation ordonnée par l'autre commande de vitesse de rotation sur la base de la vitesse de rotation du premier ventilateur (20) transmise par le premier élément de soufflage (12) lorsque le premier élément de soufflage (12) fonctionne avec la fonction de limitation de courant.

4. Appareil de climatisation (1) selon l'une quelconque des revendications 1 à 3, dans lequel une quantité soufflée du premier ventilateur (20) est égale à une quantité soufflée du deuxième ventilateur (23) lorsque le premier ventilateur (20) et le deuxième ventilateur (23) tournent chacun à la même vitesse de rotation, et la première vitesse de rotation ordonnée par la première commande de vitesse de rotation (V1) est identique à la deuxième vitesse de rotation (V2) ordonnée par la deuxième commande de vitesse de rotation, et la vitesse de rotation du premier ventilateur (20) du premier élément de soufflage (12) fonctionnant avec la fonction de limitation de courant est identique à la vitesse de rotation du deuxième ventilateur (23) ordonnée par l'autre commande de vitesse de rotation.

5. Appareil de climatisation (1) selon l'une quelconque des revendications 1 à 4, dans lequel le débit en sortie du premier moteur (21) est supérieur au débit en sortie du deuxième moteur (24).
